# EUROPEAN PATENT APPLICATION

(11) **EP 4 704 274 A1**
(43) Date of publication of application: **04.03.2026**
(21) Application number: 24196549.0
(22) Date of filing: 26.08.2024
(51) Int. Cl.: H02G 3/06, H02G 15/007

(54) **CONNECTOR**

(71) Applicant: Yazaki Europe Ltd., Christy Close Basildon Essex SS15 6EF (GB)
(72) Inventor: CUKOR KIRINIC, Ivana, 10010 Zagreb (HR); TRGOVCIC, Ivan, 47252 Barilovic (HR); ERDEC, Zeljko, 10000 Zagreb (HR); LONCAR, Zelimir, 10360 Sesvete-Zagreb (HR)
(74) Representative: Neumann Müller Oberwalleney Patentanwälte PartG mbB

(57) **Abstract**

Connector comprising:
a housing (1) longitudinally extending between a front end (2) and a rear end (3), the rear end (3) having a passage (4) for receiving an electric cable (5), and
a rear holder unit (6) secured to the housing (1) and configured to be arranged around the cable (5), the rear holder unit (6) has a rear holder (7) with longitudinally extending clamping claws (31) configured to engage the cable (5) and an actuating ring (8) configured to press the clamping claws (31) radially onto the cable (5),
wherein, in the state in which the rear holder unit (6) is secured to the housing (1), the actuating ring (8) is adjustable in a longitudinal direction between a preset position, in which the clamping claws (31) of the rear holder (7) are unengaged by the actuating ring (8), and a set position, in which the clamping claws (31) of the rear holder (7) are engaged by the actuating ring (8).

## Description

The invention relates to a connector comprising a housing longitudinally extending between a front end and a rear end, wherein the rear end has a passage for receiving an electric cable. The connector further comprises a rear holder unit secured to the housing and configured to be arranged around the cable, wherein the rear holder unit has a clamping ring with longitudinally extending clamping claws configured to engage the cable and an actuating ring configured to press the clamping claws radially onto the cable.

Such a connector is known from US 2010/151721 A1 having a rear holder in the form of a collet with fingers as clamping claws. The collet is mounted via longitudinally projecting posts to mounting holes of a cable seal arranged in the housing. Further, the connector has an actuating ring in form of a retainer that is secured to the housing of the connector. For the fixation of the retainer to the housing, the retainer is slid over the cable and the collet. As the retainer slides over the collet, an inner surface of the retainer comes into contact with slanted surfaces of the fingers inwardly biasing the fingers onto the cable. The retainer is only connected to the housing in a set position.

A comparable connector is disclosed in WO 2013/000822 A1.

EP 2 887 464 A1 discloses a connector having a retainer secured to the housing for retaining a seal within the housing. The seal being arranged between the housing and the cable. The retainer is not secured to the cable. The housing has a shield terminal crimped to a shielding conductor of the cable. The crimping connection of the shield terminal has two functions, the electrical connection between the shield terminal and the shielding conductor as well as the fixation of the housing on the cable. By crimping the shield terminal with the shielding conductor, the shield terminal is also crimped, at least indirectly, onto the cable.

In many applications it is desirable to adjust the longitudinal position of the connector housing relative to the cable before securing the housing on the cable while at the same time avoiding loose elements of the connector.

This is achieved with a connector comprising a housing longitudinally extending between a front end and a rear end, wherein the rear end has a passage for receiving an electric cable. The connector further comprises a rear holder unit secured to the housing and configured to be arranged around the cable, wherein the rear holder unit has a clamping ring with longitudinally extending clamping claws configured to engage the cable and an actuating ring configured to press the clamping claws radially onto the cable, wherein, in the state in which the rear holder unit is secured to the housing, the actuating ring is adjustable in a longitudinal direction between a preset position, in which the clamping claws of the rear holder are unengaged by the actuating ring, and a set position, in which the clamping claws of the rear holder are engaged by the actuating ring.

Accordingly, the entire rear holder unit is fixed to the housing while the actuating ring is adjustable between the preset position and the set position. The actuating ring is securely mounted to the rear holder while it can be adjusted. Hence, all elements of the rear holder unit are securely fastened to the housing and loose parts are avoided.

The actuating ring can be secured to the rear holder adjustable between the preset position and the set position. In this embodiment the rear holder can be secured to the housing to fasten the rear holder unit to the housing. It is also conceivable that the actuating ring is adjustable secured to the housing and the rear holder is secured unmovable to the housing.

In the embodiment according to which the actuating ring is adjustably secured to the rear holder, the actuating ring can be supported in its preset position against the rear holder against disassembly from the rear holder in the rearward direction. The actuating ring cannot be moved beyond the preset position in a rearward direction. This avoids that the actuating ring can be removed from the rear holder unintentionally. The actuating ring can only be moved in the rearward direction until it reaches the preset position. A further movement is not possible without using disengagement means described later.

The actuating ring can be supported in its set position against the rear holder against a rearward movement direction from the set position to the preset position. Once the actuating ring has been moved to its set position, it is securely held in this position. Preferably, it can only be moved back to the rearward preset position by unlocking the actuating ring using disengagement means described later.

In its preset position, the actuating ring can freely be moved in a forward direction from the preset position to the set position, thereby securing the connector on the cable.

To secure the actuating ring to the rear holder, the actuating ring may be provided with a longitudinally extending locking arm having a locking surface which, in the preset position of the actuating ring, is supported rearwardly in the longitudinal direction against a first support surface of the rear holder. Thereby, the actuating ring cannot be moved beyond the preset position in a rearward direction. The actuating ring, therefore, cannot be removed unintentionally and loose parts are avoided before the connector is finally secured to the cable.

The locking arm of the actuating ring can also be supported with the locking surface rearwardly in the longitudinal direction against a second support surface of the rear holder, in the set position of the actuating ring.

The connector can have several locking arms as described above each of which can be supported against first and second support surfaces as described. The locking arms can be evenly distributed about the circumference of the actuating ring.

For each of the locking arms the rear holder can have a longitudinally extending disengagement channel for inserting a disengagement tool. The disengagement channel is configured such that as the disengagement tool is inserted into the disengagement channel the disengagement tool presses the locking arm radially outward and thereby disengages the locking surface from either the first support surface or the second support surface.

To secure the rear holder to the housing, the rear holder may have a latch element engaged to the housing. In the secured state, the rear holder cannot be moved in the longitudinal or circumferential direction relative to the housing.

To facilitate this, the rear holder may have a longitudinally extending latch arm with a latch protrusion engaging into a latch opening of the housing.

In an exemplary embodiment, the latch arm extends from a ring portion of the rear holder in a direction opposite to a mounting direction of the rear holder to the housing. The mounting direction is orientated in the forward longitudinal direction. However, it is also conceivable that the latch arm extends in the opposite direction from the ring portion.

Typically, electric cables have conductors or wires that are covered by an outer insulating layer. The clamping claws of the rear holder may be configured to engage the outer insulating layer of the cable to hold the connector secured on the cable.

In an exemplary embodiment, the clamping claws are extending from a ring portion of the rear holder in a rearward direction. The clamping claws each have a ramp surface inclined towards the longitudinal axis in the rearward direction. The actuating ring is in contact with the ramp surfaces when moving from the preset position to the set position, pushing the clamping claws radially inward. The clamping claws are engaging into the insulating layer of the cable and hold the connector by clamping forces. In order to increase the clamping effect, the clamping claws may have serrated surfaces that penetrate into the outer insulating layer, preferably without cutting through the outer insulating layer completely in a radial direction.

The connector may further comprise a shield terminal to be connected to a shielding conductor of the cable. The shielding conductor can be a tube-like layer around one or more inner conductors, which are covered by inner insulative layers. The shielding conductor is covered by the outer insulating layer of the cable. To connect the shield terminal to the shielding conductor the outer insulating layer is stripped off the cable at least at an end section thereof exposing the shielding conductor. Typically, the shielding conductor is made of a breaded conductive material. The exposed part of the shielding conductor can be pulled back over the outer insulating layer.

The connector may further comprise a ferrule to be arranged around the cable, wherein the shield terminal and the ferrule are configured to sandwich the shielding conductor of the cable. The shield terminal has a sleeve like portion that is arranged around the exposed shielding conductor and the ferrule. The shield terminal is crimped onto the ferrule sandwiching the shielding conductor between the shield terminal and the ferrule. The ferrule has a rigidity allowing to crimp the shield terminal onto the ferrule without compressing the ferrule so that the ferrule remains movable in longitudinal direction. The ferrule is therefore not crimped onto the insulating layer.

An embodiment of the invention will now be described, by way of example, with reference to the accompanying drawings, wherein:
- Figure 1: is a perspective view of the connector with a cable,
- Figure 2: is another perspective view of the connector according to Figure 1,
- Figure 3: is an exploded perspective view of the rear holder unit of the connector according to Figure 1,
- Figure 4: is another exploded perspective view of the rear holder unit according to Figure 3,
- Figure 5: is a longitudinal section of the rear holder unit according to Figures 3 and 4 through the locking arms in the preset position of the actuating ring,
- Figure 6: is a longitudinal section of the rear holder unit according to Figure 5 through the locking arms in the set position of the actuating ring,
- Figure 7: is a longitudinal section of the rear holder unit according to Figures 3 to 6 through the clamping claws in the preset position of the actuating ring,
- Figure 8: is a longitudinal section of the rear holder unit according to Figure 7 through the clamping claws in the set position of the actuating ring,
- Figure 9: is a longitudinal section of the connector and the cable according to Figure 1 and
- Figure 10: is an exploded perspective view of the connector according to Figure 9.

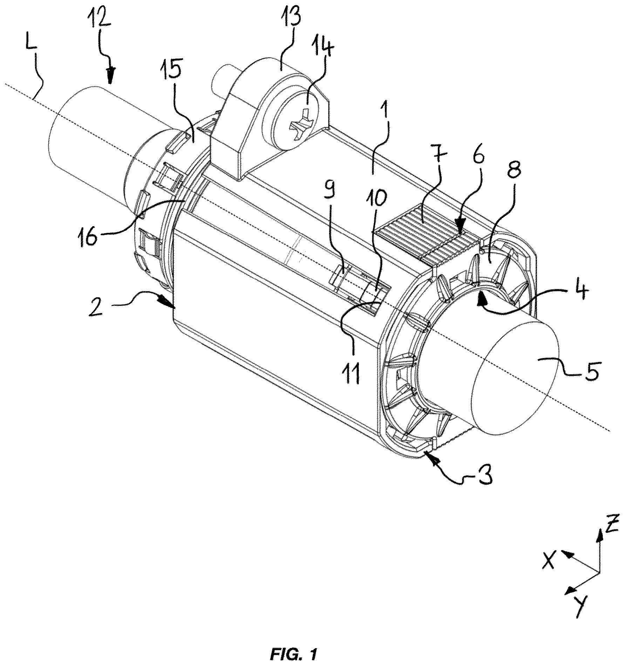

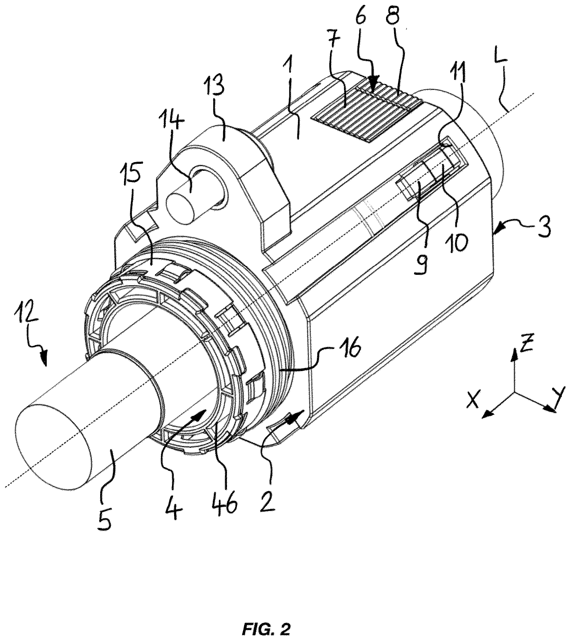

Figures 1 and 2 show a connector having a housing 1 that extends between a front end 2 and a rear end 3 along a longitudinal axis L.

In the following a rearward direction is meant as the direction parallel to a direction from the front end 2 towards the rear end 3. A forward direction is parallel to a direction from the rear end 3 towards the front end 2. The forward direction is identical to the direction of the X-axis in the Cartesian coordinate system depicted in the Figures.

At the rear end 3 the housing 1 has a passage 4 for receiving a cable 5. In the present embodiment, the cable 5 runs through the entire housing 1 and exits the housing 1 at the front end 2. In other embodiments, it is conceivable that the cable 5 is lead into the housing 1 without exiting the housing 1 at the front end 2. In this case, typically conductors of the cable 5 would be connected to terminals inside the housing.

The connector further comprises a rear holder unit 6 having a rear holder 7 and a actuating ring 8. The rear holder unit 6 is secured to the housing 1 via latch arms 9 having latch protrusions 10 that are engaged into latch openings 11 of the housing.

Any other appropriate fixation is also conceivable, such as for instance latch arms on the housing 1 and latch openings on the rear holder unit 6.

At the front end 2, the cable 5 exits the housing 1 with a terminating end 12. In the shown embodiment, the cable 5 has one central conductor (described later) for a high voltage application. The central conductor is configured to be electrically connected to a high voltage terminal, for example an eyelet terminal. It is, however, also conceivable that the cable 5 has a plurality of conductors each being configured to be connected to a terminal.

In the present embodiment, the connector is configured to be fastened to the wall of a housing (not shown) of a counterpart device that accommodates connection terminals. The cable 5 is lead through an insertion hole of the wall of the counterpart device to be connected to the connection terminals inside the counterpart device. To fasten the housing 1 to the housing of the counterpart device, the housing 1 of the connector has a fastening lug 13 with a fastening screw 14. When the cable 5 is connected to the connection terminals of the counterpart device and the connector is secured to the counterpart device, axial forces may act on the cable due to manufacturing tolerances. This is particularly the case in high-voltage applications where the cable 5 has a large diameter and is relatively stiff. The connector according to the invention avoids such axial forces because it can be moved axially along the cable 5 to a limited extent and can be secured to the cable 5 in a position with no or less axial forces.

The cable 5 is shielded and has a shielding conductor, as explained in detail later, that is connected to a shield terminal 15 of the connector. The shield terminal 15 projects in longitudinal direction out of the housing 1 and is configured to come in contact with a receptacle of the wall of the counterpart device. The wall of the counterpart device is made of metal so that an electric contact between the shielding conductor of the shielded cable 5 and the counterpart device is established.

To seal the inside of the counterpart device to the outside, the connector has a seal 16 arranged rearward of the shield terminal 15.

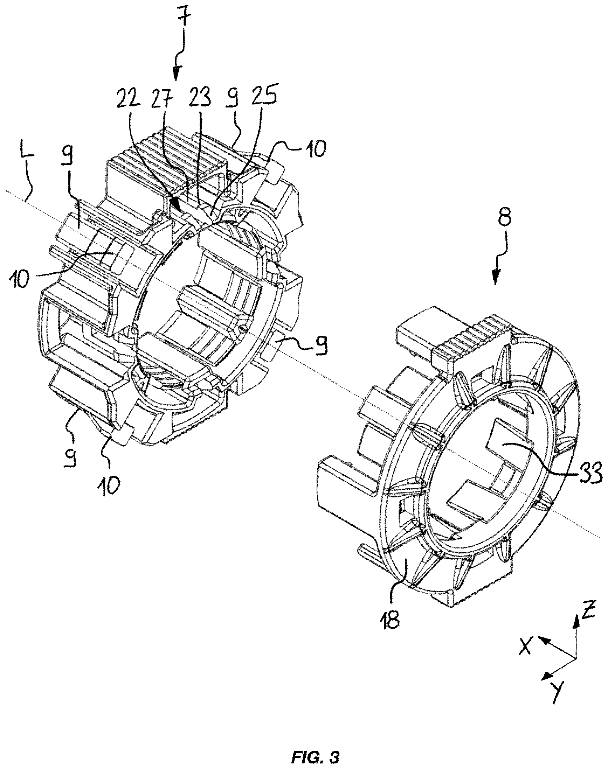

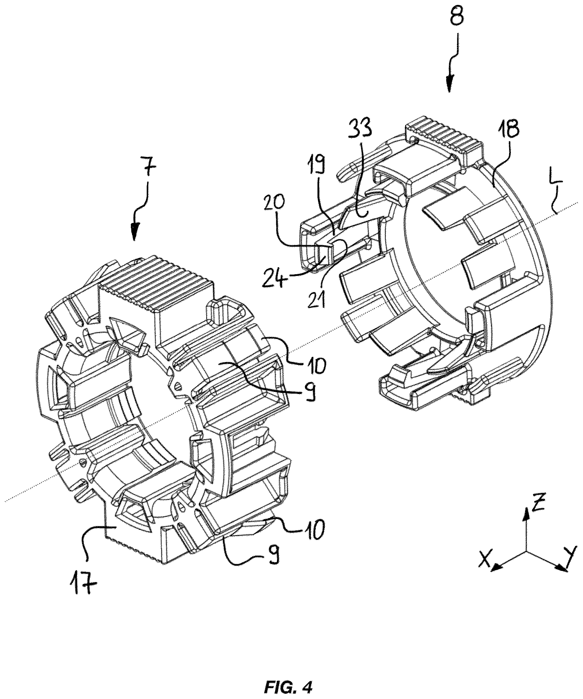

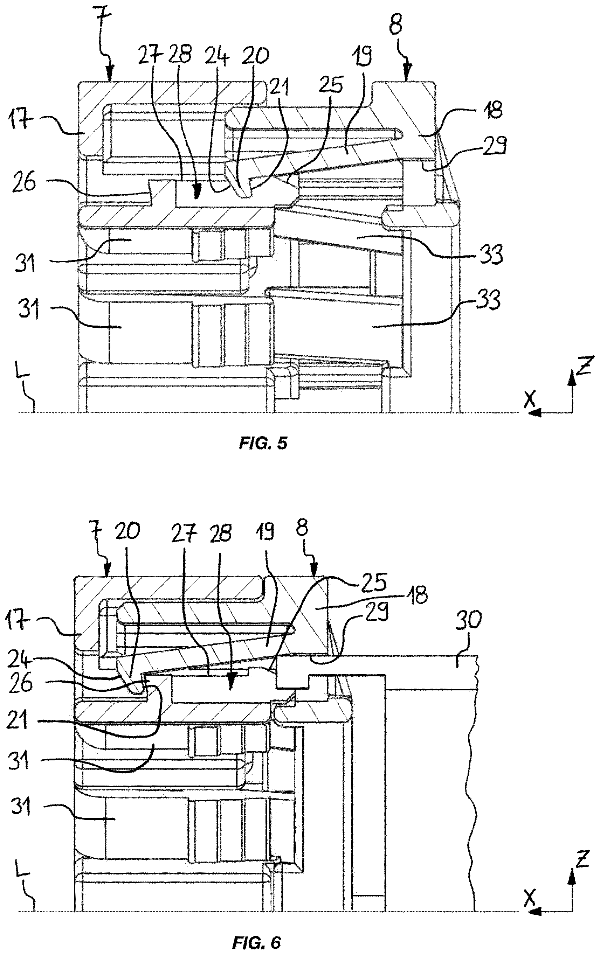

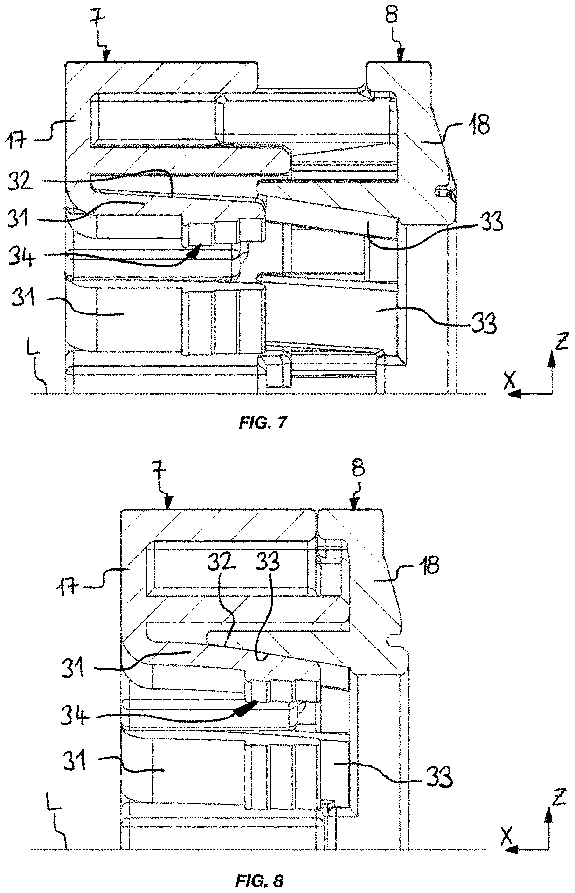

As can be seen in Figures 5 to 8, the actuating ring 8 can be moved relative to the rear holder 7 in a forward longitudinal direction parallel to the longitudinal axis L between a preset position (Figures 5 and 7) and a set position (Figures 6 and 8). This is possible while the rear holder 7 is securely held to the housing 1. The latch arms 9 are each integrally connected to a ring portion 17 at a front end of the rear holder 7, as can be seen also in Figures 3 and 4. The latch arms 9 extend longitudinally rearwardly at a radial distance from the ring portion 17 on a radial outer side thereof.

The actuation ring 8 has also a ring portion 18 with locking arms 19 extending therefrom in a forward direction. The locking arms 19 are each integrally connected to the ring portion 18 of the actuation ring 8. The locking arms 19 are flexible in a radial direction traverse to the longitudinal axis. The locking arms 19 each have a locking protrusion 20 with a locking surface 21 facing in a rearward direction.

The rear holder 7 is provided with support sections 22 for each locking arm 19. The support sections 22 each have a first support surface 23 facing in a forward direction. In the preset position of the actuating ring 8, the locking surfaces 21 of the locking arms 19 are supported against the first support surfaces 23 in a rearward direction. Hence, the actuating ring 8 cannot be remove from the rear holder 7 unintentionally. In the forward direction, however, the actuating ring 8 can be moved freely relative to the rear holder 7 to move the actuating ring 8 to the set position.

To mount the actuating ring 8 to the rear holder 7, the front ends of the locking protrusions 20 of the locking arms 19 have a ramp surface 24. The ramp surface 24 is inclined towards the longitudinal axis L in a rearward direction. The support sections 22 of the rear holder 7 each have also a ramp surface 25 that is inclined towards the longitudinal axis in a rearward direction. Therefore, when the actuating ring 8 is being pushed onto the rear holder 7, the ramp surfaces 24, 25 slide on each other and push the locking arms 19 radially outward. When the preset position is reached, the locking arms 19 snap radially behind the first support surfaces 23 of the support sections 22.

In the preset position, the locking protrusions 20 are radially inwardly biased against a guide surface 27 of the rear holder 7. As the actuating ring 8 is pushed forward relative to the rear holder 7, the locking protrusions 20 slide along the guiding surfaces 27 until they reach the set position. When reaching the set position, the locking arms 19 snap radially behind second support surfaces 26 of the support sections 22. The second support surfaces 26 are facing in the forward direction so that in the set position the locking surfaces 21 of the locking arms 19 are supported against the second support surfaces 26 in a rearward direction. Hence, the actuating ring 8 cannot be move towards the preset position unintentionally.

The support sections 22 are each provided with a disengagement channel 28 parallel to the longitudinal axis L. The disengagement channels 28 each run through the ramp surface 25 and the guiding surface 27 and are formed as a slot open in a radial and in a rearward direction. Each of the disengagement channels 28 is aligned with a disengagement opening 29 penetrating through the ring portion 18 of the actuating ring 8 in a longitudinal direction. To disassemble the actuation ring 8 from the rear holder 7, a disengagement tool 30 can be inserted in a forward longitudinal direction through the disengagement openings 29 into the disengagement channels 29, as can best be seen in Figure 6. The disengagement tool 30 is then arranged radially inwardly of the locking arms 19 which are inclined towards the longitudinal axis L in a forward direction. Alternatively, the locking arms 19 may have a disengagement surface that is inclined in the same direction. When inserting the disengagement tool 30 further into the disengagement channels 29, it lifts the locking arms 19 radially outward and disengages the locking surface 21 from the first and/or second support surface 23, 26. Hence, the actuating ring 8 can be removed from the rear holder 7.

The ring portion 17 of the rear holder 7 has forwardly in the longitudinal direction extending clamping claws 31 extending thereof. The clamping claws 31 are each integrally connected to the ring portion 17 of the rear holder 7 at a front end thereof. The clamping claws 31 are flexible in a radial direction traverse to the longitudinal axis. Each clamping claw 31 has a ramp surface 32 facing radially outward. The ramp surfaces 32 of the clamping claws 31 are inclined towards the longitudinal axis L in the rearward direction.

The actuating ring 8 is in contact with the ramp surfaces 32 of the rear holder 7 and slides along the same when being moved from the preset position to the set position, thereby pushing the clamping claws 31 radially inward (Figure 8). In the disclosed embodiment, the actuating ring 8 has also ramp surfaces 33 that are inclined towards the longitudinal axis L in the rearward direction to come into contact with the ramp surfaces 32 of the clamping claws 31.

When being pushed radial inwardly, the clamping claws 31 engage into an outer insulating layer 38 of the cable 5 to hold the connector by clamping forces. In order to increase the clamping effect, the clamping claws 31 each have a serrated surfaces 34 facing radially inward that engage deeper or even cut into the outer insulating layer 38, preferably without penetrating the outer insulating layer 38 completely in a radial direction.

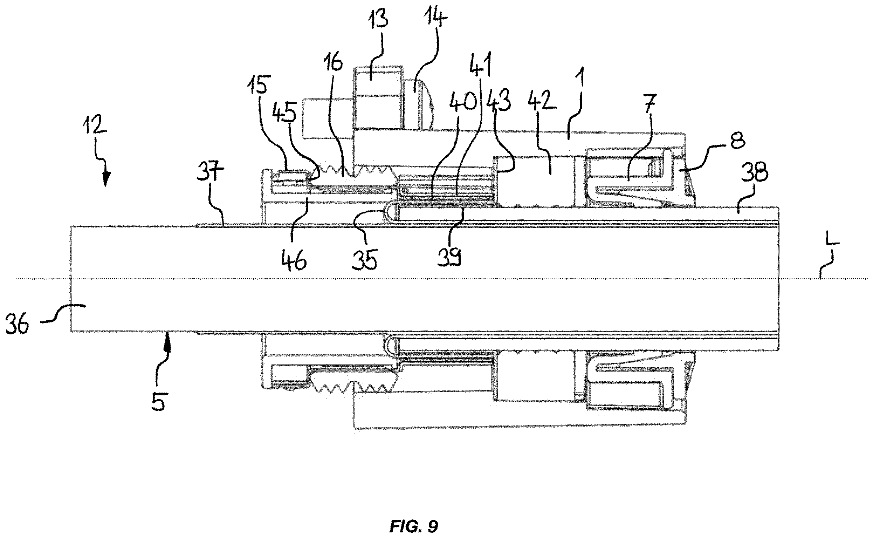

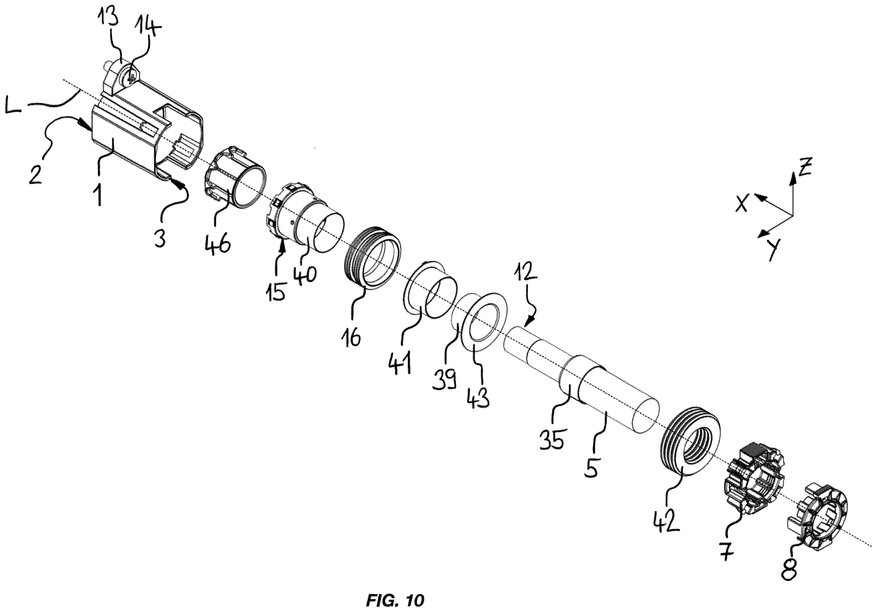

Figure 9 shows the connector arranged on the cable 5 with the shield terminal 15 electrically connected to a shielding conductor 35 of the cable 5. Figure 10 shows the connector in an exploded view. The cable 5 has a central conductor 36 for high voltage power transmission. The central conductor 36 is covered by an inner insulating layer 37. The shielding conductor 35 is tube like covering the inner insulating layer 37. The shielding conductor 35 may be made of a breaded conductive material. The shielding conductor 35 is covered by an outer insulating layer 38.

At the terminating end 12 of the cable 5 the outer insulating layer 38 has been stripped off exposing the shielding conductor 35. The shielding conductor 35 has been folded back in a rearward direction onto the outer insulating layer 38. The shield terminal 15 is arranged around the folded back portion of the shielding conductor 35. At the very end of the terminating end 12 of the cable 5 the inner insulating layer 37 has been stripped off exposing the central conductor 36 so that latter can be connected to an electric terminal.

The connector further has a ferrule 39 arranged radially between the portion of the shielding conductor 35 that is folded back and the outer insulating layer 38 of the cable 5. The shield terminal 15 has a sleeve portion 40 that is arranged around the shielding conductor 35 in directly electrical contact thereto. The shield terminal 15 is crimped onto the ferrule 39 sandwiching the shielding conductor 35 between the shield terminal 15 and the ferrule 39. The ferrule 39 has a rigidity allowing to crimp the shield terminal 15 onto the ferrule 39 without compressing the ferrule 39 so that the ferrule 39 remains movable in longitudinal direction on the cable 5 and not being secured to the cable 5. The ferrule 39 itself is not crimped onto the outer insulating layer 38. Thus, the function of making an electrical connection is accomplished by the crimp connection of the shield terminal 15 and the function of holding the connector securely on the cable 5 is accomplished by the rear holder unit 6. These two functions are separated from each other.

In the shown embodiment, a crimping sleeve 41 is arranged around the sleeve portion 40 of the shield terminal 15 from crimping the shield terminal 15.

In the housing 1 a seal 42 is arrange axially between the ferrule 39 and the rear holder 7. The ferrule 39 has at a rear end a retaining washer 43. The seal 42, hence, is securely held axially between the retaining washer 43 and the rear holder 7.

The crimping sleeve 41 is provided on a front end with a retaining washer 44 which holds the seal 16 longitudinally in a rearward direction. To hold the seal 16 longitudinally in a forward direction, the shield terminal 15 has a shoulder 45. The shield terminal 15 is arranged on a holding sleeve 46.

### Reference Numerals

- 1: Housing
- 2: Front end
- 3: Rear end
- 4: Passage
- 5: Cable
- 6: Rear holder unit
- 7: Rear holder
- 8: Actuating ring
- 9: Latch arm
- 10: Latch protrusion
- 11: Latch opening
- 12: Terminating end of the electric cable
- 13: Fastening lug
- 14: Fastening screw
- 15: Shield terminal
- 16: Seal
- 17: Ring portion of the rear holder
- 18: Ring portion of the actuating ring
- 19: Locking arm
- 20: Locking protrusion
- 21: Locking surface
- 22: Support section
- 23: First support surface
- 24: Ramp surface of locking arm
- 25: Ramp surface of supporting section
- 26: Second support surface
- 27: Guiding surface
- 28: Disengagement channel
- 29: Disengagement opening
- 30: Disengagement tool
- 31: Clamping claw
- 32: Ramp surface of a clamping claw
- 33: Ramp surface of the actuating ring
- 34: Serrated surface
- 35: Shielding conductor
- 36: Central conductor
- 37: Inner insulating layer
- 38: Outer insulating layer
- 39: Ferrule
- 40: Sleeve portion
- 41: Crimping sleeve
- 42: Seal
- 43: Retaining washer of the ferrule
- 44: Retaining washer of the crimping sleeve
- 45: Shoulder
- 46: Holding sleeve

- L: Longitudinal axis

## Claims

1. Connector comprising:
a housing (1) longitudinally extending between a front end (2) and a rear end (3), the rear end (3) having a passage (4) for receiving an electric cable (5), and a rear holder unit (6) secured to the housing (1) and configured to be arranged around the cable (5), the rear holder unit (6) has a rear holder (7) with longitudinally extending clamping claws (31) configured to engage the cable (5) and an actuating ring (8) configured to press the clamping claws (31) radially onto the cable (5),
**characterized in**
**that**, in the state in which the rear holder unit (6) is secured to the housing (1), the actuating ring (8) is adjustable in a longitudinal direction between a preset position, in which the clamping claws (31) of the rear holder (7) are unengaged by the actuating ring (8), and a set position, in which the clamping claws (31) of the rear holder (7) are engaged by the actuating ring (8).

2. Connector according to claim 1,
**characterized in**
**that** the actuating ring (8) is secured to the rear holder (7) adjustable between the preset position and the set position.

3. Connector according to claim 2,
**characterized in**
**that** in the preset position the actuating ring (8) is supported against the rear holder (7) against disassembly from the rear holder (7).

4. Connector according to claim 2 or 3,
**characterized in**
**that** in the set position, the actuating ring (8) is supported against the rear holder (7) against movement to the preset position.

5. Connector according to any one of claims 1 to 4,
**characterized in**
**that** in the preset position, the actuating ring (8) can freely be moved from the preset position to the set position.

6. Connector according to any one of claims 1 to 5,
**characterized in**
**that** the actuating ring (8) has a longitudinally extending locking arm (19) having a locking surface (21) which, in the preset position of the actuating ring (8), is supported rearwardly in the longitudinal direction against a first support surface (23) of the rear holder (7).

7. Connector according to claim 6,
**characterized in**
**that** the locking arm (19) of the actuating ring (8), in the set position of the actuating ring (8), is supported with the locking surface (21) rearwardly in the longitudinal direction against a second support surface (26) of the rear holder (7).

8. Connector according to claim 6 or 7,
**characterized in**
**that** the rear holder (7) has a longitudinally extending disengagement channel (28) for inserting a disengagement tool (30) for pressing the locking arm (19) radially outward.

9. Connector according to any one of claims 1 to 8,
**characterized in**
**that** the rear holder (7) is secured to the housing (1).

10. Connector according to any one of claims 1 to 9,
**characterized in**
**that** the rear holder (7) has a latch element (9) engaged to the housing (1) to secure the rear holder (7) to the housing (1).

11. Connector according to any one of claims 1 to 10,
**characterized in**
**that** the rear holder (7) has a longitudinally extending latch arm (9) with a latch protrusion (10) engaging into a latch opening (11) of the housing (1) to secure the rear holder (7) to the housing (1).

12. Connector according to any one of claims 1 to 11,
**characterized in**
**that** the clamping claws (31) of the rear holder (7) are configured to engage an outer insulating layer (38) of the cable (5).

13. Connector according to any one of claims 1 to 12,
**characterized in**
**that** the clamping claws (31) are extending from a ring portion (17) of the rear holder (7) in a rearward direction,
**that** the clamping claws (31) each have a ramp surface (32) inclined towards a longitudinal axis (L) in the rearward direction, and
**that** the actuating ring (8) is in contact with the ramp surfaces (32) when moving from the preset position to the set position, pushing the clamping claws (31) radially inwards.

14. Connector according to any one of claims 1 to 13,
**characterized in**
**that** the connector further comprises a shield terminal (15) to be connected to a shielding conductor (35) of the cable (5).

15. Connector according to claim 14,
**characterized in**
**that** the connector further comprises a ferrule (39) to be arranged around the cable (5), wherein the shield terminal (15) and the ferrule (39) are configured to sandwich the shielding conductor (35) of the cable (5).
